# EUROPEAN PATENT APPLICATION

(11) **EP 1 050 521 A1**
(43) Date of publication of application: **08.11.2000**
(21) Application number: 98953115.7
(22) Date of filing: 12.10.1998
(51) Int. Cl.: C04B 38/02, B28B 1/50, B28B 5/00

(54) **STARTING MIXTURE FOR PREPARING A NATURALLY HARDENING CELLULAR CONCRETE WITHOUT USING AN AUTOCLAVE, AND METHOD AND DEVICE FOR MANUFACTURING ARTICLES MADE OF CELLULAR CONCRETE**

(30) Priority: 13.10.1997 RU 97116546; 27.08.1998 RU 98116040
(71) Applicant: Zakrytoe Aktsionernoe Obschestvo Arkhitekturno-Stroitelnaya Genpodryadnaya Firma "Rostra", Moscow, 123364 (RU)
(72) Inventor: STRELBIZKY, Vladimir Petrovich, Moscow-Zelinograd, 103460 (RU); SAKHAROV, Grigory Petrovich, Moscow, 113403 (RU)
(74) Representative: Schulte, Jörg, Dipl.-Ing.
(86) International application number: RU9800320
(87) International publication number: WO9919272

(57) **Zusammenfassung**

Die Erfindung gehört zum Bauwesen und zwar dort zu den Rohstoffmischungen für die Herstellung des Blasenbetons ohne Autoklavbehandlung, sowie zu der Fertigungstechnik für die Herstellung der Erzeugnisse aus diesem Blasenbeton. Die Rohstoffmischung für die Herstellung vom Blasenbeton ohne Autoklavbehandlung des natürlichen Erhärtens enthält Zement, Treibmittel, Kochsalz und Wasser, wobei als Zement Portlandzement oder schrumpfungloser Portlandzement oder spannender Zement und zusätzlich Mikrokieselerde und Superweichmacher C-3 im Verhältnis der angeführten Bestandteile in bestimmten Mas.teilen in Bezug auf Zement verwendet wird. Außerdem sind ein Verfahren und die Anlage vorgeschlagen, bei welchen die Unterhaltung in der thermoisolierten Kammer des Zustandes des satten Wasserdampfes auf Kosten des Abdampfens des Wassers aus den Erzeugnissen bei deren exotermischen Erwärmung ohne zusätzliche Wärmequellen sichergestellt wird. Das wird auf dem Wege der Ausführung der Kammer mit der inneren Auskleidung aus dem wasserbeständigen und dampfundurchlässigen Material erzielt.

## Description

Die Erfindung betrifft eine Rohstoffmischung zur Herstellung des Blasenbetons ohne Autoklavbehandlung, sowie ein entsprechendes Herstellungsverfahren und eine Anlage.

Es ist eine Rohstoffmischung für die Herstellung von Blasenbeton, die Portlandzement, Kalk, Chlorkalzium, Siberbronze und Wasser entält (SU, A, 1491857) bekannt. Sie hat Gusskonsistenz und enthält große Mengen von Wasser (-56...84% von der Zementmasse), was das Erreichen von einer hohen Festigkeit des Blasenbetons ohne Autoklavbehandlung unter Herabsetzung der Dichte nicht ermöglicht, was die Friste der Gewinnung der Anlassfestigkeit und die Beweglichkeit der geformten Erzeugnisse unter natürlichem Erhärten verlängert, abgesehen von dem Vorhandensein einer erhöhten Mege des Beschleunigers zum Erhärten (Kochsalz in den Mengen von 2...3,6% von der Zementmasse). Dabei ist die Korrosion der Armatur und die Möglichkeit des Salzanlaufens unausweichbar, was den Einsatz der bekannten Mischung begrenzt. Außerdem weisen die Gussmischungen eine große Einschrumpfung (über 3 mm/m) beim Erhärten des Blasenbetons ohne Autoklavbehandlung, besonders unter natürlichen Bedingungen auf.

Weiter ist eine Herstellungsmethode für Bauerzeugnisse aus Blasenbeton ohne Autoklavbehandlung und auf dem Wege zur Formierung aus hochviskosen vibrierenden Mischungen (SU, A, N 365339) bekannt. Die bekannte Methode sieht für die Beschleunigung des Erhärtens die Anwendung von hochviskosen vibrierenden Mischungen und die Wärmebehandlung der geformten Erzeugnisse unter Temperatur von 80...100 °C im Laufe von 5...8 Stunden vor. Aber bei den bekannten Zusammensetzungen von Rohstoffmischungen gestattet diese Methode nicht die Beschleunigung des Erhärtens des Blasenbetons in kürzeren Fristen ohne Wärmebehandlung um seine Festigkeit wesentlich zu erhöhen, sowie die Einschrumpfung und technologische Feuchtigkeit herabzusetzen.

Bekannt sind auch Anlagen für die Herstellung von Erzeugnissen aus verschiedenen Betonarten mit Ausfüllstoffen in Eizelformen, sowie auf dein Wege des Schneidens von großen Mengen mittels Saiten (im Falle von Blasenbeton) in Stücke mit Sollgrüßen. Alle bekannten technologischen Fertigungslinien mit dem Ziel der Beschleunigung des Erhärtens des Betons sehen Wärmebehandlung mit Außenwärmequellen (mit Dampf, elektrischen Strom, Infrarotstrahlung) in Autoklaven, Gruben- und Tunnelkammern, Kassettenanlagen (SU, A, N 365339) vor. Die Wärmebehandlung von Betonerzeugnissen mit Außenwärmequellen hat eine Reihe von Nachteilen:
- bedingt die Entstehung von Temperatur- und Feuchtigkeitsgradienten und entsprechenden Spannungen im Durchschnitt der Erzeugnisse, die zu den Rissen führen können, was die Wärmebehandlung von großen Mengen des Blasenbetons ohne vorheriges Zerschneiden behindert und deren Dauer erhöht.
- Das Saitenschneiden von großen Mengen kann die strickte Einhaltung von geometrischen Formen, sowie der Größen der geschnittenen Erzeugnisse und der Qualität der Oberfläche des Schneidens nicht sicherstellen.
- Das Vorhandensein von Temperatur- und Feuchtigkeitgradienten im Durchschnitt der Erzeugnisse bedingt die systematische Ungleichmäßigkeit der Eigenschaften des Blasenbetons in der Menge der Erzeugnisse, was deren potentielle Möglichkeiten bezüglich der Tragfähigkeit; des Wärmeschutzes, Dampf- und Luftdurchdringbarkeit herabsetzt.
- Für die Wärmebehandlung der Erzeugnisse gibt man große Mengen von Wärme- und Stromenergie aus, was die Notwendigkeit einer entwickelten Betriebsinfrastruktur, die den technologischen Prozess begleitet, bedingt.
- Die Wärmebehandlung von Betonerzeugnissen verteuert deren Preis und entsprechenderweise die Baukosten bedeutend.

Die Verwendung von Ausfüllstoffen mit Berücksichtigung deren großen Mengen ebenfalls verlangt zusätzlichen Material- und Energieaufwand für den Bau und Bedienung von Lagern, Ansammlern und der Ausrüstung für Verarbeitung (Zerkleinerung, Fraktionierung, Waschen, Trocknung, Enzfrosten, Mahlung im Falle des Blasenbetons). Außerdem sind die bekannten Fertigungslinien nicht genug mechanisiert und automatsiert und deswegen sind durch erhöhten Arbeitsaufwand gekennzeichnet.

Bekannt ist auch eine Anlage für die Herstellung von Bauerzeignissen aus Blasenbeton ohne Autoklavbebandlung, die die in der technologischen Reihenfolge integrierte Anlagengruppe der Dosierung der Bestandteile, Anlagengruppe der Vorbereitung der Blasenbetonmischung aus den dosierten Bestandteile, Anlagengruppe der Formierung der Erzeugnisse, Anlagengruppe der Haltedauer der formierten Erzeugnisse und die Anlagengruppe der Wärmebehandlung der formierten Erzeugnisse mit Wärmedämmkamer enthält (Baschenow J.M., Konar A.G. «Fertigung von Beton- und Stahlbetonerzeugnissen», m., Bauwesenverlag, 1984, Seite 616-633).

Eine bekannte Anlage, sowie der größte Teil der ähnlichen Fertigungslinien, enthält Anlagengruppen der Lagerung von Ausfüllstoffen, Anlagengruppe deren Trocknung, Mahlung, Schlammbassin und Ausrüstung für die volumenmäßige Dosierung, dabei befindet sich die Anlagengruppe der Saitenschneidung vor der Anlagengruppe der Wärmebehandlung, die in Form von einer Wärmekammer mit der Außenzuführung von Wärme und Strom, die ebenfalls durch die obenerwähnten Nachteile gekennzeichnet ist.

Der Erfindung liegt die Aufgabe zugrunde, eine Rohstoffmischung für die Herstellung von Blasenbeton ohne Autoklavbehandlung mit natürlichem Erhärten zu schaffen, die eine erhöhte Festigkeit und ein beschleunigtes Erhärten des Blasenbetons mit gleichzeitiger Herabsetzung der Dichte sowie Schrumpfung erbringt. Außerdem soll der Energieverbrauch und die Produktionskosten reduziert werden.

Die Aufgabe wird dadurch gelöst, dass als Zement Portlandzement oder schrumpfungloser Portlandzement oder spannender Zement und zusätzlich Mikrokieselerde und Superweichmacher C-3 im Verhältnis der angeführten Bestandteile in Mas.teilen in Bezug auf Zement verwendet wird:
- Zement: 1
- Kochsalz oder Kalzium: 0,005...0,01
- Mikrokieselerde: 0,04...0,1
- Superweichmacher C-3: 0,002...0,05
- Treibmittel: 0,0016...0,002
- Wasser: 0,3...0,4

Technisches Ergebniss der Erfindung ist damit die Erhöhung der Festigkeit, Herabsetzung der Einschrumpfung und der technologischen Feuchtigkeit, sowie die Sicherstellung der Herabsetzung der Selbstwärmebehandlung der Erzeugnisse und Herabsetzung des Arbeitsaufwandes beim Herstellungsprozess von Erzeugnissen aus dem Blasenbeton ohne Autoklavbehandlung des natürlichen Erhärtens.

Es sind zusätzliche Varianten der Ausführung der Erfindung möglich, wo es zweckmäßig ist:
- in der Rohstoffmischung zusätzlich Brennkalk mit 0,05...0,1 Teilen und/oder Gips mit 0,05...0,1 Teilen von der Zementmasse zu verwenden.
- als Mikrokieselerde und Superweichmacher C-3 das fertige Produkt Modifikator des Betons MB-01 zu verwenden.
- dass die Rohstoffmischung zusätzlich als Treibmittel Alluminium- und/oder Zink- und/oder Magnesium- und/oder Siliziumeisen- und/oder Silikatkalziumpudersand- und/oder Wasserstoffperoxidlösung- und/oder Kaliumpermanganat- und/oder Kalk in der Mischung mit der Salzsäure- und/oder Aluminiumsulfät mit kalzinierter Soda in der Menge enthält, die den berechneten Umfang Gas-Luftblasen im Blasenbeton sicherstellt.

Superweichmacher C-3 entspricht den Anforderungen von TU 6-36-0204229-625.

Betonmodifikator MB-01 entspricht den Anforderungen der technischen Bedingungen TU 5743-04902495332-96.

Verfahrensmäßig wird die obenangeführte Aufgabe dadurch gelöst, dass in der bekannten Art der Herstellung der Bauerzeugnisse, die in der Formierung der Erzeugnisse aus hochviskosen vibrierenden Mischungen besteht mit dem danachfolgenden natürlichen Erhärten, für die Produktion von Blasenbeton als Rohstoffmischung die Mischung nach Anspruch 1 oder Anspruch 2 oder Anspruch 3 oder Anspruch 4 verwendet wird.

Außerdem nach dem natürlichen Erhärten ist es zweckmäßig das Schneiden durchzuführen um die gewünschten Größen der Erzeugnisse zu bekommen.

Die obenangeführte Aufgabe mit der Erziehlung des technischen Ergebnisses wird auf dem Wege dessen gelöst, dass in der bekannten Anlage für die Herstellung von Bauerzeugnissen aus dem Blasenbeton ohne Autoklavbebandlung, die die in der technologischen Reihenfolge integrierte Anlagengrippe der Dosierung der Bestandteile, Anlagengruppe der Vorbereitung der Blasenbetonmischung aus den dosierten Bestandteilen, Anlagengruppe der Formierung der Erzeugnisse, Anlagengruppe der Haltedauer der formierten Erzeugnisse und die Anlagengruppe der Wärmebehandlung der formierten Erzeugnisse mit Wärmedämmkamer enthält, wobei die Anlagengruppe der Dosierung der Bestandteile über Dosierapparate verfügt, die die Dosierung der Bestandteile in folgenden Teilen im Verhältnis zu Zement sicherstellen:
- Zement: 1
- Kochsalz oder Kalzium: 0,005...0,01
- Mikrokieselerde: 0,04...0,1
- Superweichmacher C-3: 0,002...0,05
- Treibmittel: 0,0016...0,002
- Wasser: 0,3...0,4

Die Wärmedämmkamer für die Wärmebehandlung der formierten Erzeugnisse verfügt über eine Absperkonstruktion, die mit dem Widerstand der Wärmeübertragung nicht unter 0,73 m2C°/Watt und mit der Möglichkeit der Abdichtung für die Sicherstellung der Bedingungen der pseudodiabatischen Wärmebehandlung der Erzeugnisse ausgeführt ist.

Es sind zusätzliche Varianten der Ausführung der Erfindung möglich, wo es zweckmäßig ist:
- die Anlage mit der Gruppe des Schneidens zu versehen, die nach der Gruppe der Wärmebehandlung der formierten Erzeugnisse, deren Wärmedämmkamer mit der inneren Auskleidung aus dem wasserbeständigen und dampfundurchlässigen Material ausgeführt ist mit der Möglichkeit der Unterhaltung in der Kammer des Zustandes des satten Wasserdampfes auf Kosten des Abdampfens des Wassers aus den Erzeugnissen bei der exotermischen Erwärmung der Ezeugnisse ohne zusätzliche Wärmequellen, und die Wasserdosieranlage der Dosieranlagengruppe der Bestadteile mit der Möglichkeit dessen Lieferung unmittelbar in die Knetmaschine der Gruppe der Vorbereitung der Blasenbetonmischung unter Temperatur 10-30 C° ausgerüstet ist.
- innere Auskleidung der Wärmedämmkamer aus rostfreiem Stahl oder Alluminium oder einer Legierung auf dessen Grundlage oder aus Polymermaterial auszuführen.
- die Anlage mit dem automatisiertem System der Steuerung der erwähnten Gruppen auszurüsten.
- Arbeitsteil der Schneidensgruppe ist in Form einer Säge auszuführen.

Laut der Erfindung enthält die Rohstoffmischung für die Herstellung von Blasenbeton ohne Autoklavbehandlung des natürlichen Erhärtens, Zement, Teibmittel, Kochsalz und Wasser, dabei als Zement enthält die Rohstoffmischung Portlandzement oder schrumpfungslosen Portlandzement oder spannenden Zement und zusätzlich Mikrokieselerde und Superweichmacher C-3 im Verhältnis der angeführten Bestandteile in Mas.teilen in Bezug auf Zement:
- Zement: 1
- Kochsalz oder Kalzium: 0,005...0,01
- Mikrokieselerde: 0,04...0,1
- Superweichmacher C-3: 0,002...0,05
- Treibmittel: 0,0016...0,002
- Wasser: 0,3...0,4

In der Rohstoffmischung fehlen die für den Konstruktions- und Wärmedämmblasenbeton typischen Ausfüllstoffe: gemahlener Sand, Asche, Schlacke, die das Erreichen einer hohen Festigkeit des Blasenbetons ohne Autokalvbehandlung unter Herabsetzung der Dichte, besonders beim natürlichen Erhärten nicht gestatten; eine Schrumpfung herabsetzen, die Bildung von großen Mengen von Erzeugnissen und Erzeugnissenmassen ohne Risse und die Möglichkeit in diesem Zusammenhang des Schneidens nach den Elementen der benötigten Größe im festen und nicht im plastischen wie gewöhnlich Zustand behindern. Für die Überwindung von diesen Nachteilen enthält die angebotene Rohstoffmischung eine reaktionsfähige Mikrokieselerde mit der spezifischen Oberfläche nicht unter 12 m2/g, Brennkalk und Gips, die in den Mengen eingeführt werden, die eine maximale Festigkeit und minimale Einachrumpfung von Zementstein und Balsenbeton des natürlichen Erhärtens sicherstellen. Im Falle der Verwendung von schrumpfunglosem und spannendem Zement und der Herstellung von unbewehrten kleineren Elementen aus Blasenbeton kann man Kalk und Gips in die Mischung nicht einführen. Aber für die größeren und bewehrten Erzeugnisse ist deren Einführung in die Rohstoffmischung zweckmäßig für den größeren Ausdruck der Treibung, die die Rissbildung behindert.

Mikrokieselerde, die in die Rohstoffmischung eingeführt wird, tritt in physischchemische Wechselwirkung mit Kalk, der bei der Hydrolyse von Alit und Belit im Zement hervortritt, sowie mit dem Kalt, der zusätzlich in die Rohstoffmischung eingeführt wird und bildet mit dem Kalk eine zusätzliche Menge von hochfesten basisarmen Kalziumhydrolikaten, die die Struktur des Zementsteines und des Balsenbetons im Ganzen festigen.

Die Einführung in die Rohstoffmischung einer zusätzlichen Menge von Kalk und Gips geschieht mit der Berechnung der maximalen Bindung von Aluminaten und Kalziumaluminoferriten des Zementes in Ettringit und dessen zeitliche Stabilisiesung. Für die Verhinderung des Zerfalls von Ettringit auf einer früheren Etappe des Erhärtens von Beton ohne Autoklavbehandlung muss die Temperatur der Umwelt nicht ueber 60 C° sein. Der entstehende Ettringit bildet die Treibung des entstehenden Zementsteines, die die Einachrumpfung wieder gut macht.

Die kondensierte Mikrokieselerde bekommt man auf dem Wege der Gewinnung von den Ärmel- oder elektrischen Filtern des Systems der Gasreinigung von Öfen, die die siliziumhaltige Legierungen ausschmelzen, zum Beispiel Ferrosilizium. Hauptkomponent der Mikrokieselerde ist Siliziumdioxid einer amorphen Modifizierung, dessen Gehalt 85 % und mehr erreicht. In kleineren Mengen in kondensierter Mikrokieselerde sind Laugeoxide Na2o und Ka2o (nicht über 2 %), Kalziumoxid, CaO (nicht über 3 %) und Schwefeldioxid, So2 (nicht über 0,6 %) vorhanden.

Betonmodifikator MB-01 entspricht den Anforderungen der technischen Bedingungen bezüglich der Produktion und Verwendung im Bauwesen. Betonmodifikator MB-01 wird in vier Formen hergestellt: MB-8-01, MB-10-01, MB-12-01 und MB-14-01. Ziffern in Klammern geben den Gehalt vom Superweichmacher C-3 im Betonmodifikator prozentweise mit Berechnung des trockenen Stoffes an. Der komplexe Charakter des Betonmodifikators MB-01 erleichtert die Fertigungstechnik bedeutend. Es entfällt die Notwendigkeit in den zusätzlichen Linien der getrennten Übernahme, Aufbewahrung, Beförderung, Vorbereitung und Dosierung von Mikrokieselerde und Superweichmacher. Übernahme, Aufbewahrung, Beförderung und Dosierung des Betonmodifikators MB-01 erfolgt nach der dem Zement ähnlichen Schema. Der Betonmodifikators MB-01 verfügt über eine erhöhte Einschüttdichte (700...800kg/m3) im Vergleich zu der gewöhnlichen Mikrokieselerde (150...500kg/m3 in Abhängigkeit von der Dichtung); zum Unterschied von dem Letzteren bleibt in Silos und Behältern nicht und hat erhöhte Oberflächenflüssigkeit, was seine Beförderung und Dosierung erleichtert.

Superweichmacher C-3 ermöglicht neben der herabgesetzten Temperatur der Mischung und Vibration zusätzlich die Wassermenge des Anrührens zu reduzieren ohne Reduzierung der Beweglichkeit der Mischung, was in der Gesamtheit einen bedeutenden Zuwachs der Festigkeit des Blasenbetons ohne Autoklavbehandlung und Verbesserung von seinen sämtlichen Eigenschaften sicherstellt.

Als Bindemittel wird schrumpfungloser Portlandzement der Marke PZ 400, 500 BU, spannender Zement der Marke NZ-2(4) und Portlandzement der Marke PZ 400, 500 DO verwendet. Im letzten Fall wie oben erwähnt muss man in die Rohstoffmischung eine zusätzliche Menge von Kalk und Gips einführen. Diese Einführung neben Kochsalz und Kalzium ermöglicht die Temperatur und ph-Wert der Rohstoffmischung zu erhöhen, die mit nicht angewärmtem Wasser angerührt wird; ihr Treiben und Erhaerten zu beschleunigen; die Bildung der erhöhten Menge von Nadelettringit zu fördern, der das beschleunigte Erhärten von Blasenbeton und Herabesetzung von Einschrumpfung sicherstellt.

Die Verwendung von hochviskosen vibrierenden Mischungen, die durch beschleunigtes Erhärten gekennzeichnet sind, ermöglicht um 2...3,5 Male die Menge des einzuführenden Beschleunigers des Erhärtens (Kochsalz) im Vergleich zu dessen Menge in der bekannten Rohstoffmischung zu reduzieren.

Laut der Erfindung enthält die Anlage für die Herstellung von Bauerzeignissen aus Blasenbeton ohne Autoklavbehandlung die in der technologischen Reihenfolge integierte Anlagengruppe für die Dosierung der Bestandteile, Anlagengruppe der Vorbereitung der Blasenbetonmischung aus den dosierten Bestandteilen, Anlagengruppe der Formierung der Erzeugnisse, Anlagengruppe der Haltedauer der formierten Erzeugnisse und die Anlagengruppe der Wärmebehandlung der formierten Erzeugnisse mit Wärmedämmkamer deren Absperkonstruktion mit dem Widerstand der Wärmeübertragung nicht unter 0,73 m2C°/Watt und mit der Möglichkeit der Abdichtung für die Sicherstellung der Bedingungen der pseudodiabatischen Wärmebehandlung der Erzeugnisse ausgeführt ist.

Die Anlage der Dosierung der Bestandteile der Michung verfügt über Dosierapparate, die die Dosierung der Bestandteile in folgenden Teilen sicherstellen im Verhältnis zu Zement:
- Zement: 1
- Kochsalz oder Kalzium: 0,005...0,01
- Mikrokieselerde: 0,04...0,1
- Superweichmacher C-3: 0,002...0,05
- Treibmittel: 0,0016...0,002 (Alluminiumpudersand)
- Wasser: 0,3...0,4

Die Anlagenguppe des Schneidens der Erzeugnisse als Arbeitsvorgang verfügt über Sägen und ist nach der Anlagenguppe der Wärmebehandlung der formierten Erzeugnisse untergebracht, deren Wärmedämmkamer mit der inneren Auskleidung aus dem wasserbeständigen und dampfundurchlässigen Material ausgeführt ist mit der Mölichkeit der Unterhaltung in der Kammer des Zustandes des satten Wasserdampfes auf Kosten des Abdampfens des Wassers aus den Erzeugnissen bei der exotermischen Erwärmung des Erzeugnisses ohne zusätzliche Wärmequellen und die Wasserdosieranlage der Dosieranlagenguppe der Bestandteile mit der Möglichkeit, dessen Lieferung unmittelbar in die Knetmaschine der Anlagenguppe der Vorbereitung der Blasenbetonmischung unter Temperatur 10-30 C° ausgerüstet ist.

Innere Auskieldung der Wärmedämmkamer kann aus rostfreiem Stahl oder Alluminium oder einer Legierung auf dieser Grundlage oder aus Polymermaterial ausgeführt werden.

Für die Sicherstellung der abgestimmten Arbeit der Anlagenguppen der Anlage wird ein automatisiertes System der Steuerung der erwähnten Anlagenguppen verwendet.

Die Rohstoffmischung für die Herrstellung der Blasenbeton bereitet man vor auf dem Wege der Vermischung der Bestandteile in folgender Reihenfolge bei deren Einführung in die Knetmaschine der Anlagenguppe der Vorbereitung der Blasenbetonmischung: Wasser, Kochsalz oder Kalzium, Zement, Kalk, Gips, Mikrokieselerde, Superweichmacher C-3 oder Betonmodifikator MB-01, Teibmittel. Verhältnis des Wassers zu den festen Bestandteilen in der Rohstoffmischung beträgt 03,...0,4 bei der mittleren Dichte des Blasenbetons 500...400 kg/m3, Temperatur des Wasses des Anrührens beträgt 20±5°C. Die Zeit der Vermischung der Bestandteile in den schnellen Knetmaschinen beträgt 3...5 Minuten bis zur Einführung des Treibmittels und 1,5...2 Minuten mit Treibmittel nach seiner Einführung. Das Beulen der Mischung erfolgt unter Vibration im Laufe von 8...12 Minuten.

Nach der Beendigung des Beulens erhärten die formierten Erzeugnisse und Erzeugnissenmassen unter natürlichen Bedingungen in feuchter Umgebung in den Wärmedämmkammern unter Temperatur nicht über 60°C, die in der Kammer und den Erzeugnissen im Laufe von 10...12 Stunden sichergestellt wird. Nur auf Kosten der Wärme der Hydrotation von Zement, Kalk und Gips unter begrenztem Wärmeverlust infolge der geringen Wärmeleitung des Blasenbetons der reduzierten Dichte und des erhöhten Wärmeschutzes der Kammer. Nach so einem Erhärten gewinnt der Blasenbeton aus den angebotenen Bestandteilen der Rohstoffmischung 50...70% der Projektfestigkeit.

Die Verwendung der Rohstoffmischung, die laut der Erfindung hergestellt wird, gewährleistet die Produktion vom umweltsauberen Blasenbeton des natürlichen Erhärtens der nach der Festigkeit, Deformativität und anderen Eigenschaften den besten Mustern des Blasenbetons mit Autoklavbehandlung nicht nachsteht. Die Wärmeselbstbehandlung der Erzeugnisse und der Erzeugnissemassen erfolgt unter pseudodiabatischen Bedingungen, die in dem abgeschlossenen Umfang der Wärmekammer auf Kosten der Wärme entstehen, die bei der Hydration der Bindemittel hervortritt, und stellt eine gleichmäßige Verteilung der Temperatur und der Feuchtigkeit im ganzen Umfang der Erzeugnisse und der Erzeugnissemassen sicher, was die Entstehung von Gradienten der Feuchtigkeit, der Temperatur und der Spannungen und die Möglichkeit der Rissenbildung ausschließt. Die Temperatur in den Erzeugnissen und Erzeugnissemassen in der isotermischen Periode erzielt 55...65°C und darüber und uni Ausgang der Kammer 35...40°C. Die nötige hohe Feuchtigkeit der Umgebung in der Kammer entsteht auf Kosten des Andampfens des Wassers aus den Betonerzeugnissen. Unter Berücksichtigung von geringem Feuchtigkeitsgehalt des satten Dampfes unter Atmosphärendruck entsteht ein Gleichgewicht schnell. Infolgedessen sinkt die Feuchtigkeit des Blasenbetons und beträgt bei geringem Ausgangverhältnis des Wassers zu den festen Bstandteilen nach der Beendigung der «Selbstdampfung» 12-15%.

Die Erzeugnisse und Erzeugnissemassen, die aus solchen Rohstofftmischungen hergestellt werden, erhärten in einer thermoisolierten Kammer ohne Bordausrüstung, die von innen abgenommen wird nach dem Vorerhärten im Laufe von 2 Stunden in einer kurzen Vorkammer einer ähnlichen Anlage in der Anlagenguppe der Haltedauer von geformten Erzeugnissen. Die Ausgangaparameter der Festigkeit und der Feuchtigkeit des Blasenbetons nach der Wärmeselbstbehandlung im Laufe von 10-12 Stunden gestatten unmittelbares Schneiden der Erzeugnisse mit Sägen des Schneidensanlagenguppe mit der Einhaltung von hohen Genauigkeit der geometrischen Größen,

| Arten der Bestandteile der Rohstoffmischung und Eigenschaften von Blasenbeton | Gehalt der Bestandteile der Rohstoffmischung, Masen der Teilen im Verhältnis zu Zement | | | | | | | | |
|---|---|---|---|---|---|---|---|---|---|
| | angebotene Kompositionen | | | | | bekannte Kompositionen | | | |
| | Blasenbeton ohne Autoklavbehandlung | | | | | Blasenbeton ohne Autoklavbehandlung | | | Bet. mit Autoklavbehandlung |
| | 1 | 2 | 3 | 4 | 5 | 1' | 2' | 3' | 4' |
| Mineralbindende: -Portlandzement | 1 | 1 | 1 | 1 | | 1 | 1 | 1 | 1 |
| -schrumpfungloser | - | - | - | - | 1 | - | - | - | - |
| Portlandzement oder spannender Zement, NZ-2(4) | | | | | | | | | |
| Kalk | 0,05 | 0,05 | 0,05 | 0,1 | - | 0,06 | 0076 | 0,091 | 4,0 |
| Gips | 0,05 | 0,05 | 0,05 | 0,1 | - | 0,01 | 0,0286 | 0,0364 | |
| Betonmodifikator, MB-01 | 0,04 | 0,05 | 005 | 0,05 | 0,05 | - | - | - | - |
| wasserverdünnbares Mittel WRP-1 | - | - | - | | - | 0,0003 | 0,00038 | 0,00045 | - |
| Quarzsand, gemahlen | - | - | - | | - | - | - | - | 14,0 |
| NaCl(CaCl2) | 0,01 | 0,01 | 0,01 | 0,01 | 0,01 | 0,02 | 0,0286 | 0,0364 | - |
| Treibmittel (Alluminiumpuder) | 0,002 | 0,0016 | 0,0019 | 0,00166 | 0,00182 | 0,0006 | 0,00076 | 0,0009 | 0,02 |
| Wasser | 0,0367 | 0,0394 | 0,406 | 0,405 | 0338 | 0,833 | 0,69 | 0,56 | 13,22 |
| Eigenschaften von Blasenbeton: durchnittliche Dichte, kg/m3 | 492 | 503 | 450 | 440 | 512 | 325 | 350 | 350 | 500 |
| Festigkeit beim Druck, Mpa nach 10-12 Stunden des natürlichen Erärtens bei 50...60°C | 2,31 | 2,46 | 2,01 | 1,9 | 2,51 | - | - | - | - |
| dasselbe nach 3 Tagen und Nächten | - | - | - | - | - | 0,8 | 0,8 | 0,75 | - |
| nach 28 Tagen und Nächten | 3,75 | 3,9 | 3,35 | 3,01 | 4,1 | 1,3 | 1,2 | 1,2 | |
| nach Autoklavbehandlung | - | - | - | - | - | - | - | - | 3,5 |
| Luft-Feuchte-Einschrumpfung mm/m(%) | 0,55 | 0,53 | 0,59 | 0,563 | ≤0 | - | - | - | 0,5... 0,6 |

was nachher den Anschluss mittels Klebenähten ermöglicht, was die Tragfähigkeit der Konstruktion und thermotechnische Gleichmäßigkeit erhöht. Es ist die Einführung nach der Mahlung in die Mischung von Schneidensabgrateen vorgesehen, was die Strukturbildung verbessert und Einschrumpfung herabsetzt.

Der duchschnittliche Gesamtverbrauch der Energie für die technologischen Zwecke im Industriezweig bei der Produktion von Erzeugnissen aus Blasenbeton beträgt 382,436 Mkal/m3.

Der durchschnittliche Verbrauch der Energie (des Stromes) für die technologischen Zwecke inbezug auf die eingesetzte Fertigungsmethode in Übereinstimmung mit den berechneten Angaben beträgt 69 Kilowattstunden/m3 oder 59,34 Mkal/m3, d. h. um das 8-fache weniger.

Die angebotene Rohstoffmischung, Art und Durchführung der Herstellung von Bauerzeugnissen aus Blasenbeton ohne Autoklavbehandlung auf deren Basis ermöglichen die Festigkeit bis zu dem Niveau der besten Muster des Blasenbetons mit Autoklavbehandlung der einheimischen und ausländischen Produktion zu erhöhen, die durchschnittliche Dichte herabzusetzen, Feuchte- und Karbonisationseinschrumpfung zu minimisieren und sogar zu beseitigen und bedeutend Betriebseigenschaften im Zusammenhang mit der schroffen Verringerung von Kapillarporigkeit zu verbessern. Die Vergleichsdaten bezüglich der bekannten und angebotenen Rohstoffmischungen für die Herstellung von Blasenbeton und von seinen Eigenschaften sind in der Tabelle angeführt.

Einen wesentlichen Vorteil des Blasenbetons ohne Autoklavbebandlung, der nach der angebotenen Art aus Rostoffmischungen hergestellt wird, stellt die Herabsetzung von Strom- und Metallaufwand bei seiner Produktion infolge der vollen Beseitigung der traditionellen (beheizten) Wärme-Feuchtebearbeitung (Autoklavbehandlung, Dämpfung, elektrische Erwärmung, Bestrahlung und ähnliches) dar, Fehlen von Sand und damit zusammenhängender Arbeit, Ausrüstung und Stromaufwand für diese Arbeit und Verringerung von Produktionsflächen. Das stellt neben der spezifischen Zusammensetzung der Mischung die Herabsetzung des Stromverbrauches und der Selbstkosten des Blasenbetons ohne Autoklavbehandlung um das 1,5...2 fache im Vergleich zu dem Balsenbeton mit Autoklavbehandlung sicher und bedingt die Perspektie des Ausbaus seiner Proudktion und des Einsatzes im Bau.

## Patentansprüche

1. Rohstoffmischung für die Herstellung vom Blasenbeton ohne Autoklavbehandlung des natuerlichen Erhärtens, die Zement, Treibmittel, Kochsalz und Wasser enthält,
**dadurch gekennzeichnet,**
dass die Rohstoffmischung als Zement Portlandzement oder schrumpfunglosen Portlandzement oder spannenden Zement und zusätzlich Mikrokieselerde und Superweichmacher C-3 im Verhältnis der angeführten Bestandteile in Mas.teilen in Bezug auf Zement
Zement 1
Kochsälz oder Kalzium 0,005...0,01
Mikrokieselerde 0,04...0,1
Superweichmacher C-3 0,002...0,05
Treibmittel 0,0016...0,002
Wasser 0,3...0,4
aufweist.

2. Rohstoffmischung nach Anspruch 1,
**dadurch gekennzeichnet,**
dass sie zusätzlich Brennkalk mit 0,05...0,1 Teilen und/oder Gips mit 0,05...0,1 Teilen von der Zementmasse enthält.

3. Rohstoffmischung nach Anspruch 1,
**dadurch gekennzeichnet,**
dass die Mischung als Mikrokieselerde und Superweichmacher C-3 das fertige Produkt Modifikator des Betons MB-01 aufweist.

4. Rohstoffmischung nach Anspruch 1,
**dadurch gekennzeichnet,**
dass sie als Treibmittel Metallpuder von Alluminium, und/oder Zink und/oder Magnesium und/oder Siliziumeisen und/oder Sililkatkalzium und/oder Wasserstoffperoxidlösung und/oder Kaliumpermanganat und/oder Kalk in der Mischung mit Salzsäure und/oder Aluminiumsulfat mit kalziniertem Soda in der Menge enthält, die den berechneten Umfang Gas-Luftblasen im Blasenbeton sicherstellt.

5. Verfahren zur Herstellung von Bauerzeugnissen aus Blasenbeton ohne Autoklavbehandlung,
**dadurch gekennzeichnet,**
dass als Zement Portlandzement oder schrumpfunglosen Portlandzement oder spannenden Zement und zusätzlich Mikrokieselerde und Superweichmacher C-3 im Verhältnis Zement [1], Kochsalz oder Kalzium [0,005...0,01], Mikrokieselerde [0,04...0,1], Superweichmacher C-3 [0,002...0,05], Treibmittel [0,0016...0,002] und Wasser [0,3...0,4] eingesetzt und miteinander vermischt wird, wobei Brennkalk mit 0,05...0,1 und/oder Gips mit 0,05...0,1 Teilen, statt Mikrokieselerde und Superweichmacher C-3 Modifikator des Betons MB-01 und als Treibmittel Metallpuder von Alluminium, und/oder Zink und/oder Magnesium und/oder Siliziumeisen und/oder Silikatkalzium und/oder Wasserstoffperoxidlösung und/oder Kaliumpermanganat und/oder Kalk in der Mischung mit Salzsäure und/oder Aluminiumsulfat mit kalziniertem Soda in der Menge enthält, die den berechneten Umfang Gas-Luftblasen im Blasenbeton sicherstellt, zugemischt werden.

6. Verfahren nach Anspruch 5,
**dadurch gekennzeichnet,**
dass nach dem natuerlichem Erhaerten das Schneiden fit den Erhalt der Erzeugnisse der bentöigten Große erfolgt.

7. Anlage für die Herstellung von Bauerzeugnissen aus Blasenbeton ohne Autoklavbebandlung, die die in der technologischen Reihenfolge integrierte Anlagenguppe der Dosierung der Bestandteile, Anlagenguppe der Vorbereitung der Blasenbetonmischung aus den dosierten Bestandteilen, Anlagenguppe der Formierung der Erzeugnisse, Anlagenguppe der Haltedauer der formierten Erzeugnisse und die Anlagenguppe der Waermebehandlung der formierten Erzeugnisse mit Wärmedämmkamer enthält,
**dadurch gekennzeichnet,**
dass die Anlagenguppe der Dosierung der Bestandteile über Dosierapparate verfügt, die die Dosierung der Bestandteile in folgenden Teilen im vorgeschriebenen Verhältnis zu Zement sicherstellen
Zement 1
Kochsalz oder Kalzium 0,005...0,01
Mikrokieselerde 0,04...0,1
Superweichmacher C-3 0,002...0,05
Treibmittel 0,0016...0,002
Wasser 0,3...0,4
und die über eine Wärmedämmkammer der Anlagenguppe für die Waermebehandlung der formierten Erzeugnisse verfügt, die eine Absperrkonstruktion aufweist, die mit dem Widerstand der Wärmeübertragung nicht unter 0,73 m2C°/Watt und mit der Möglichkeit der Abdichtung für die Sicherstellung der Bedingungen der pseudodabatischen Wärmebehandlung der Erzeugnisse ausgeführt ist.

8. Anlage nach Anspruch 7,
**dadurch gekennzeichnet,**
dass eine Anlagenguppen zum Schneiden vorgesehen ist, die nach der Gruppe der Waermebehandlung der formierten Erzeugnisse untergebracht ist, deren Wärmedämmkamer mit der inneren Auskleidung aus dem wasserbeständigen und dampfundurchlässigen Material ausgeführt ist mit der Möglichkeit in der Kammer den Zustand des satten Wasserdampfes auf Kosten des Abdampfens des Wassers aus den Erzeugnissen bei der exotermischen Erwärmung der Erzeugnisse ohne zusätzliche Wärmequellen zu unterhalten und die Wasserdosieranlage der Dosieranlagengruppe der Bestandteile mit der Möglichkeit, dessen Lieferung unmittelbar in die Knetmaschine der Gruppe der Vorbereitung der Blasenbetonmischung unter Temperatur 10-30C°.

9. Anlage nach Anspruch 7,
**dadurch gekennzeichnet,**
dass die innere Auskleidung der Wärmedämmkamer aus rostfreiem Stahl oder Alluminium oder einer Legierung auf dessen Grundlage oder aus Polymermaterial ausgeführt ist.

10. Anlage nach Anspruch 7,
**dadurch gekennzeichnet,**
dass sie mit dem automatisiertem System der Steuerung der erwähnten Anlagenguppe ausgeüstet ist.

11. Anlage nach Anspruch 7,
**dadurch gekennzeichnet,**
dass der Arbeitsteil der Schneidenanlagenguppe in Form einer Säge ausgeführt ist.
